# EUROPÄISCHE PATENTANMELDUNG

(11) **EP 3 646 984 A1**
(43) Veröffentlichungstag der Anmeldung: **06.05.2020**
(21) Anmeldenummer: 19191787.1
(22) Anmeldetag: 14.08.2019
(51) Int. Cl.: B23Q 1/00, B23Q 1/62, B23Q 7/04, B25J 19/00, B60L 53/30, B60S 1/00

(54) **LADEPORTAL MIT EINER MEDIUMSTATION**

(30) Priorität: 30.10.2018 DE 102018127102
(71) Anmelder: Liebherr-Verzahntechnik GmbH, 87437 Kempten (DE)
(72) Erfinder: Mattern, Thomas, 87669 Rieden (DE); Albrecht, Vanessa, 87452 Altusried (DE); Bechteler, Konrad, 87488 Betzigau (DE)
(74) Vertreter: Behr, Wolfgang

(57) **Zusammenfassung**

Die vorliegenden Erfindung umfasst ein Ladeportal mit mindestens einem an einer horizontalen Führungsschiene verfahrbaren Wagen, insbesondere zum Transport von Werkstücken zwischen Stationen eines Produktionssystems. Erfindungsgemäß weist das Ladeportal eine Medienstation auf, welche in mindestens einer Position des Wagens mit diesem lösbar mechanisch koppelbar ist, um mindestens eine Medienverbindung zwischen der Medienstation und dem Wagen herzustellen.

## Beschreibung

Die vorliegende Erfindung betrifft ein Ladeportal mit mindestens einem an einer horizontalen Führungsschiene verfahrbaren Wagen. Solche Ladeportale dienen insbesondere zum Transport von Werkstücken zwischen Stationen eines Bearbeitungssystems wie Bearbeitungsmaschinen und/oder Zu- und/oder Abführeinrichtungen. Solche Ladeportale werden teilweise auch als Portalroboter oder Obertransfereinrichtung bezeichnet.

In der Serienfertigung von Werkstücken, insbesondere der mechanischen Bearbeitung von Werkstücken, werden die Werkstücke in der Regel nach einem genau geplanten Fertigungsablauf nacheinander mehreren Werkzeugmaschinen zugeführt. Dazu werden die Werkstücke zunächst über eine Zuführeinrichtung in das Produktionssystem eingeschleust und dann innerhalb des Produktionssystems von einer Bearbeitungsmaschine zur nächsten weitertransportiert. Je nach Anzahl der Fertigungsoperationen werden die Werkstücke entweder über eine Abführeinrichtung aus dem Produktionssystem ausgeschleust, oder über eine Zwischenautomation an ein weiteres Produktionssystem übergeben. Der Transport der Werkstücke von einer Station des Produktionssystems zur nächsten kann über ein Ladeportal erfolgen. In dem Produktionssystem können auch mehrere Ladeportale parallel oder in Serie arbeiten. Weiterhin können mehrere Wagen an dem Ladeportal vorgesehen sein.

Ladeportale arbeiten üblicherweise vollautomatisiert, wobei die Ansteuerung der Wagen über stationäre, zentral angeordnete Steuerungen erfolgt, welche den Betrieb der Wagen mit dem Betrieb der Bearbeitungsmaschinen und der Zu- und/oder Abführeinrichtung koordiniert.

Solche Ladeportale sind beispielsweise aus der 10 2012 011 534 A1, der DE 10 2013 014 266 A1 sowie der DE 10 2014 014 874 A1 bekannt. Ladeportale aus dem Stand der Technik weisen zur Versorgung des bzw. der Wagen mit Energie und Schmiermittel sowie zur Datenübertragung mit dem Wagen eine Versorgungskette mit entsprechenden Versorgungsleitungen auf. Versorgungsketten sind aufgrund der Bewegung des Wagens jedoch einem erheblichen Verschleiß ausgesetzt. Weiterhin ist eine nachträgliche Verlängerung des Ladeportals nur unter komplettem Austausch der Versorgungskette möglich. Zudem besteht ein Sicherheitsrisiko, da die Versorgungskette von ihrer Auflagefläche herunterfallen kann.

Aus der DE 10 2006 049 588 A1 ist ein Transportsystem mit einem Schienensystem und darauf bewegbar angeordneten Wagen gezeigt, wobei die Schienen ein Primärleitersystem umfassen, an das zumindest eine vom Wagen umfasste Sekundärspule induktiv gekoppelt ist zur berührungslosen Übertragung elektrischer Leistung und/oder Information. Hierdurch soll auf eine Versorgungskette verzichtet werden können, da die Energieversorgung oder die Kommunikation mit dem Wagen berührungslos erfolgt.

Druckschrift DE 10 2017 109 818 A1 beschreibt ein Ladeportal, bei welchem der Wagen einen elektrischen Energiespeicher für einen Antrieb des Wagens umfasst.

Aufgabe der vorliegenden Erfindung ist es daher, ein verbessertes Ladeportal zur Verfügung zu stellen.

Diese Aufgabe wird durch ein Ladeportal gemäß Anspruch 1 gelöst. Bevorzugte Ausgestaltung der vorliegenden Erfindung ist Gegenstand der Unteransprüche.

Die vorliegende Erfindung umfasst ein Ladeportal mit mindestens einem an einer horizontalen Führungsschiene verfahrbaren Wagen. Das Ladeportal umfasst erfindungsgemäß eine Medienstation, welche in mindestens einer Position des Wagens mit diesem lösbar mechanisch koppelbar ist, um mindestens eine Medienverbindung zwischen der Medienstation und dem Wagen herzustellen.

Die Medienstation kann hierdurch weitere Aufgaben, welche im Stand der Technik durch eine Versorgungskette erfüllt wurden, übernehmen, und/oder die im Stand der Technik bekannte Energie- und/oder Datenübertragung verbessern.

Das erfindungsgemäße Ladeportal kann daher ohne eine Versorgungskette, d.h. ohne eine feste Kabel- und/oder Schlauchverbindung zwischen den stationären Komponenten des Ladeportals und dem Wagen, ausgeführt sein. Insbesondere ist der Wagen daher ohne die durch eine Versorgungskette bedingten Einschränkungen frei entlang der Führungsschiene verfahrbar.

Der Verzicht auf eine Versorgungskette muss erfindungsgemäß jedoch nicht durch Nachteile bei der Versorgung des Wagens mit Medien und/oder beim Betrieb des Ladeportals erkauft werden. Im Stand der Technik wurde dagegen, soweit auf eine Versorgungskette verzichtet wurde, nur deren Funktion im Hinblick auf die Versorgung des Wagens mit elektrischer Energie und die Datenübertragung ersetzt, während die übrigen Funktionen der Versorgungskette unberücksichtigt blieben. Weiterhin wurde auch die Energie- und/oder Datenübertragung nicht optimal gelöst.

Das erfindungsgemäße Ladeportal kann insbesondere zum Transport von Werkstücken zwischen Stationen eines Bearbeitungssystems wie Bearbeitungsmaschinen und/oder Zu- und/oder Abführeinrichtungen dienen. Insbesondere kann es dabei zu den Zwecken eingesetzt werden, welche oben im Hinblick auf den Stand der Technik näher erläutert wurden.

In einer möglichen Ausführungsform der vorliegenden Erfindung weist die Medienstation mindestens einen Anschluss auf, welcher in mindestens einer Position des Wagens mit einem Anschluss des Wagens koppelbar ist, um das mindestens eine Medium zum Wagen zu übertragen. Insbesondere kann durch die Koppelung der Anschlüsse eine Leitung und/oder ein Behälter der Medienstation mit einer Leitung und/oder ein Behälter des Wagens verbunden werden, um das Medium von der Medienstation zum Wagen zu übertragen.

Bei der oder den Leitungen kann es sich um eine Daten-, Signal- und/oder Stromleitung handeln.

Bevorzugt dienen Anschlüsse der Medienstation jedoch der Übertragung eines physischen Mediums. Bevorzugt erfolgt die Kopplung zwischen den Anschlüssen dichtend, dass eine dichte Verbindung zwischen dem Anschluss der Medienstation und dem Anschluss des Wagens hergestellt wird.

In einer ersten Variante der vorliegenden Erfindung sind die Anschlüsse so ausgestaltet, dass eine Verbindung zwischen einem bestimmten Anschluss der Medienstation und einem bestimmten Anschluss des Wagens in nur einer definierten Position des Wagens möglich ist.

In einer zweiten Variante kann die Verbindung zwischen der Medienstation und dem Wagen durch einen Anschluss erfolgen, welcher beweglich am Wagen und/oder der Ladeeinrichtung angebracht ist und daher eine Relativbewegung zwischen Wagen und Ladeeinrichtung erlaubt. Hierdurch ist eine definierte Verfahrbewegung des Wagens auch bei geschlossener Verbindung zwischen Medienstation und Wagen möglich.

In einer möglichen Ausführungsform der vorliegenden Erfindung erfolgt die Kopplung zwischen der Medienstation und dem Wagen durch einen Aktor der Medienstation und/oder des Wagens. Insbesondere kann der Aktor so ausgebildet sein, dass er eine Relativbewegung zwischen den Anschlüssen von Wagen und Medienstation erzeugt, welche zumindest einen Anteil aufweist, welcher senkrecht zur Verfahrrichtung des Wagens entlang der Führungsschiene verläuft.

In einer möglichen Ausführungsform der vorliegenden Erfindung umfassen die Anschlüsse an der Medienstation und/oder dem Wagen jeweils ein Ventil, welches die Anschlüsse schließt, wenn die Kopplung mit dem jeweils anderen Anschluss gelöst wird.

In einer möglichen Ausführungsform der vorliegenden Erfindung dient die Medienstation zur Versorgung des Wagens mit mindestens zwei unterschiedlichen Medien.

In einer möglichen Ausführungsform der vorliegenden Erfindung weist die Medienstation mindestens zwei Anschlüsse auf, welche mit entsprechenden Anschlüssen des Wagens dichtend koppelbar sind, und über welche mindestens zwei unterschiedliche Medien zum Wagen übertragbar sind.

In einer möglichen Ausführungsform der vorliegenden Erfindung handelt es sich bei mindestens einem Medium um ein physisches Medium, welches förderbar ist.

In einer möglichen Ausführungsform der vorliegenden Erfindung handelt es sich bei mindestens einem Medium um ein granulares, pastöses, flüssiges und/oder gasförmiges Medium. Insbesondere kann es sich um ein pastöses, flüssiges und/oder gasförmiges Medium handeln, insbesondere um ein Fluid und/oder Gas.

Ist die Medienstation zur Versorgung des Wagens mit mehreren unterschiedlichen Medien ausgestaltet, so handelt es sich bevorzugt bei mehreren der unterschiedlichen Medien um physische Medien, welche förderbar sind und/oder um granulare, pastöse, flüssige und/oder gasförmige Medien. Insbesondere kann es sich um pastöse, flüssige und/oder gasförmige Medien handeln, insbesondere um mehrere unterschiedliche Fluide und/oder Gase. Alternativ oder zusätzlich kann es sich bei mindestens einem der Medien um ein nicht-physisches Medium wie Strom, Signale und/oder Daten und bei einem anderen Medium um ein physisches Medium handeln.

Mögliche Medien, welche mittels der Medienstation zum Wagen übertragbar sind, und/oder hiermit verbundene Einsatzzwecke der Medienstation werden im Folgenden näher beschrieben. Dabei kann eine Medienstation mit jeder möglichen Kombination und Anzahl der im Folgenden beschriebenen Medien und/oder Einsatzzwecke eingesetzt werden:
In einer möglichen Ausführungsform der vorliegenden Erfindung ist der Wagen über die Medienstation mit Hydraulik- und/oder Pneumatikdruck beaufschlagbar. Insbesondere kann über die Medienstation daher Druckluft und/oder Hydraulikflüssigkeit zum Wagen übertragbar sein. Hierdurch muss für den Betrieb des Wagens trotz Verzicht auf eine Versorgungskette nicht auf Hydraulik- und/oder Pneumatikdruck verzichtet werden.

Ist über die Medienstation Hydraulikflüssigkeit zum Wagen übertragbar, ist bevorzugt auch ein Rücklaufverbindung zwischen dem Wagen und der Medienstation vorgesehen, so dass der Wagen an einen Hydraulikkreislauf der Medienstation anschließbar ist.

In einer möglichen Ausführungsform der vorliegenden Erfindung weist der Wagen einen hydraulischen und/oder pneumatischen Aktor auf, welcher über den über die Medienstation zugeführten Hydraulik- und/oder Pneumatikdruck betreibbar ist. Beispielsweise kann es sich bei dem Aktor um den Antrieb einer Linearachse, eines Gelenkes und/oder eines Greifers handeln.

In einer ersten Variante kann der Hydraulik- und/oder Pneumatikdruck zur Betätigung des Aktors dient, während sich der Wagen im Bereich der Medienstation befindet. Da gewisse Aktoren des Wagens wie bspw. ein Greifer üblicherweise nur in definierten Positionen des Wagens betätigt werden, in welchen der Wagen selbst nicht bewegt wird, reicht eine in einer solchen Position hergestellte Hydraulik- und/oder Pneumatikverbindung zwischen Medienstation und Wagen aus, um einen solchen Aktor zu betätigen. Eine Betätigung des Aktors in anderen Positionen des Wagens, in welchen eine Verbindung mit der Medienstation nicht besteht, ist dann nicht möglich, jedoch auch nicht notwendig.

In einer zweiten Variante kann der Hydraulik- und/oder Pneumatikdruck zum Laden eines Hydraulik- und/oder Pneumatikspeichers des Wagens dienen. Der Hydraulik- und/oder Pneumatikspeicher kann dann in Positionen des Wagens, in welchen eine Verbindung mit der Medienstation nicht besteht, genutzt werden, um einen oder mehrere Aktoren des Wagens zu betätigen.

Insbesondere kann eine Pneumatikverbindung zwischen Medienstation und Wagen genutzt werden, um einen Hydraulik- und/oder Pneumatikspeichers des Wagens zu laden.

Die erste und die zweite Variante können auch in Kombination eingesetzt werden.

In einer möglichen Ausführungsform der vorliegenden Erfindung ist ein Schmiermittelsystem des Wagens über die Medienstation mit Schmiermittel beaufschlagbar. Hierdurch ist eine automatische Schmierung des Wagens möglich. Beispielsweise kann das Ladeportal eine Steuerung aufweisen, durch welche in regelmäßigen Abständen eine Versorgung des Wagens mit Schmiermittel erfolgt.

In einer möglichen Ausführungsform der vorliegenden Erfindung ist der Wagen über die Medienstation mit Kühlmittel beaufschlagbar. Insbesondere kann der Wagen in der mindestens einen Position an einen Kühlmittelkreislauf der Medienstation anschließbar ist, um eine Komponente des Wagens zu kühlen. Hierdurch kann auch einen eigenen Kühlkreislauf des Wagens verzichtet werden.

In einer möglichen Ausführungsform der vorliegenden Erfindung ist eine Daten- und/oder Signalverbindung zwischen dem Wagen und der Medienstation herstellbar. Insbesondere kann die Daten- und/oder Signalverbindung durch die Herstellung einer elektrisch leitenden Verbindung zwischen Anschlüssen des Wagens und der Medienstation erfolgt, insbesondere über ein Stecker-Steckdosen-System.

Die Daten- und/oder Signalverbindung kann insbesondere zur Kommunikation mit einer Steuerung und/oder Sensoren des Wagens dienen. Insbesondere kann die Daten- und/oder Signalverbindung eine Kommunikation zwischen einer Steuerung des Ladeportals und einer Steuerung und/oder Sensoren des Wagens ermöglichen.

In einer möglichen Ausführungsform der vorliegenden Erfindung ist der Wagen über die Medienstation mit Elementen und/oder Medien versorgbar, welche über einen Aktor des Wagens zur Bearbeitung eines Werkstücks verbaut und/oder verbraucht werden.

Beispielsweise kann der Wagen über die Medienstation mit elektronischen und/oder mechanischen Kleinteilen, Schweißdraht und/oder Lötdraht, und/oder Strahlsand zur Sandstrahlbearbeitung versorgt werden.

In einer möglichen Ausführungsform der vorliegenden Erfindung ist der Wagen über die Medienstation mit elektrischer Energie versorgbar, wobei ein Kontaktelement der Medienstation in mindestens einer Position des Wagen mit einem Kontaktelement des Wagens leitend verbindbar ist.

Alternativ zu einer solchen leitenden Verbindung zur Energieversorgung kann die Energieversorgung jedoch auch berührungslos erfolgen, beispielsweise durch Induktion. Eine solche berührungslose Energieversorgung kann ebenfalls in die Medienstation integriert sein, benötigt jedoch nicht die erfindungsgemäße mechanische Kopplung.

In einer möglichen Ausführungsform der vorliegenden Erfindung weist der Wagen mindestens einen elektrischen Antrieb und einen elektrischen Engergiespeicher zur zumindest teilweisen Energieversorgung des Antriebs auf.

In einer möglichen Ausführungsform der vorliegenden Erfindung umfasst die Medienstation eine Ladeeinrichtung zum Laden des elektrischen Energiespeichers.

Die elektrische Verbindung zwischen der Ladeeinrichtung der Medienstation und dem Wagen kann in einer ersten Variante berührungslos erfolgen, beispielsweise durch Induktion.

Die elektrische Verbindung zwischen der Ladeeinrichtung der Medienstation und dem Wagen erfolgt jedoch bevorzugt durch einen leitenden Kontakt zwischen einem Kontaktelement der Medienstation und einem Kontaktelement des Wagens, da eine solche Verbindung erheblich höhere Ströme erlaubt als eine berührungslose Verbindung.

In einem zweiten unabhängigen Aspekt umfasst die vorliegenden Erfindung daher auch unabhängig von der bisher beschriebenen Medienstation ein Ladeportal mit mindestens einem an einer horizontalen Führungsschiene verfahrbaren Wagen, insbesondere zum Transport von Werkstücken zwischen Stationen eines Produktionssystems, wobei der Wagen mindestens einen elektrischen Antrieb und einen elektrischen Engergiespeicher zur zumindest teilweisen Energieversorgung des Antriebs aufweist, und wobei das Ladeportal eine Ladeeinrichtung zum Laden des elektrischen Energiespeichers umfasst, wobei ein Kontaktelement der Medienstation in mindestens einer Position des Wagen mit einem Kontaktelement des Wagens leitend verbindbar ist.

Die Ladeeinrichtung ist bevorzugt so ausgestaltet, dass ein Laden nur in definierten Positionen und/oder Abschnitten entlang der Führungsschiene möglich ist, in anderen dagegen nicht. Die Ladeeinrichtung kann dabei an den gleichen Positionen angeordnet sein, welche oben bereits als für die Medienstation bevorzugte Positionen beschrieben wurden.

Bevorzugte Ausgestaltungen, welche sowohl bei einer Ladeeinrichtung einer Medienstation gemäß dem ersten Aspekt, als auch im Rahmen des zweiten Aspekts zum Einsatz kommen können, werden im Folgenden näher beschrieben.

In einer möglichen Ausführungsform der vorliegenden Erfindung erlaubt die Ladeeinrichtung das Laden des Energiespeichers in mindestens zwei Positionen des Wagens.

In einer möglichen Ausführungsform der vorliegenden Erfindung erlaubt die Ladeeinrichtung das Laden des Energiespeichers in einem zusammenhängenden Bereich von Positionen des Wagens.

In einer möglichen Ausführungsform der vorliegenden Erfindung erfolgt die Kopplung zwischen Ladeeinrichtung und Wagen durch einen oder mehrere Stromanschlüsse und/oder eine Stromschiene.

Insbesondere kann die Ladeeinrichtung kann einen oder mehrere Stromanschlüsse umfassen, an welche ein Stromanschluss des Wagens koppelt. Alternativ oder zusätzlich kann die Ladeeinrichtung oder der Wagen eine Stromschiene umfassen, an welche ein Stromaufnehmer des jeweils anderen Teils koppelt.

Ist eine Stromschiene vorgesehen, so erfolgt die Kopplung mit dem Stromabnehmer bevorzugt durch das Verfahren des Wagens in die entsprechende Position entlang der Führungsschiene.

Sind an der Medienstation einer oder mehrere Stromanschlüsse vorgesehen, so erfolgt die Kopplung mit einem oder mehreren Stromanschlüssen des Wagens bevorzugt durch einen Aktor, über welchen die Stromanschlüsse mechanisch miteinander gekoppelt werden, sobald sich der Wagen in einer entsprechenden Position befindet.

Bevorzugt weist das Ladeportal eine Steuerung auf, welche die Stromversorgung durch die Ladeeinrichtung erst aktiviert, nachdem die leitende Verbindung zwischen der Ladeeinrichtung und dem Wagen hergestellt wurde. Hierdurch wird die Entstehung von Lichtbögen während des Kopplungsvorgangs verhindert.

In einer möglichen Ausführungsform der vorliegenden Erfindung ist mindestens eine Medienstation in einer Arbeitsposition, in welcher der Wagen über einer Station des Bearbeitungssystems stoppt, um ein Werkstück abzulegen oder aufzunehmen, angeordnet. Da der Wagen an einer solchen Arbeitsposition eine Zeit lang verweilt, um das Werkstück abzulegen oder aufzunehmen, kann diese Zeit nunmehr genutzt werden, um den Wagen mit einem Medium zu versorgen.

Alternativ oder zusätzlich kann mindestens eine Medienstation in einer Parkposition des Wagens angeordnet sein. In der Parkposition befindet sich der Wagen bevorzugt außerhalb des für den Transport von Werkstücken benötigten Verfahrwegs.

In einer möglichen Ausführungsform der vorliegenden Erfindung umfasst das Ladeportal mehrere Medienstationen. Insbesondere können in mehreren Arbeitspositionen, in welcher der Wagen über unterschiedlichen Stationen des Bearbeitungssystems stoppt, um ein Werkstück abzulegen oder aufzunehmen, jeweils eine Medienstation angeordnet sein.

Das erfindungsgemäße Ladeportal dient bevorzugt zur Beschickung der Bearbeitungsmaschinen und/oder Zu- und/oder Abführeinrichtung der Produktionsstraße mit Werkstücken von oben. Hierfür weist der Wagen bevorzugt eine Komponente auf, welche zumindest auch in vertikaler Richtung bewegbar ist und zum Anheben oder Absenken der Werkstücke dient.

In einer möglichen Ausführungsform der vorliegenden Erfindung weist der Wagen zwei Greifer auf, welche jeweils in vertikaler Richtung bewegbar sind, wobei das Ladeportal eine Steuerung aufweist, durch welche der eine Greifer in einer ersten Position des Wagens zum Entnehmen eines bearbeiteten Werkstücks aus einer Bearbeitungsstation und der andere Greifer in einer zweiten Position des Wagens zum Ablegen eines neuen Werkstücks an der Bearbeitungsstation angesteuert wird, wobei der Wagen zwischen dem Entnehmen des bearbeiteten Werkstücks in der ersten Position des Wagens und dem Ablegen des neuen Werkstücks in der zweiten Position des Wagens von der ersten zu der zweiten Position entlang der horizontalen Führungsschiene verfahren wird. Das Verfahren erfolgt insbesondere um nacheinander den einen und den anderen Greifer über der Bearbeitungsstation anzuordnen.

Bevorzugt ist bei einer solchen Ausgestaltung des Wagens die Ladeeinrichtung so ausgestaltet, dass das Laden des Energiespeichers sowohl in der ersten als auch in der zweiten Position des Wagens erfolgen kann. Dies ermöglicht es, die Zeit, welche jeweils für die Bewegung der Greifer in der ersten und der zweiten Position benötigt wird, zum Laden zu nutzen.

In einer möglichen Ausführungsform der vorliegenden Erfindung weist die Ladeeinrichtung einen ersten und einen zweiten Stromanschluss, wobei ein Stromanschluss des Wagens in der ersten Position mit dem ersten Stromanschluss der Ladeeinrichtung und in der zweiten Position mit dem zweiten Stromanschluss leitend verbindbar ist. Dies erfolgt bevorzugt durch einen Aktor, über welchen die Stromanschlüsse mechanisch miteinander gekoppelt werden, sobald sich der Wagen in einer entsprechenden Position befindet.

In einer möglichen Ausführungsform der vorliegenden Erfindung ist die Ladeeinrichtung dagegen so ausgestaltet, dass ein Laden auch in allen Zwischenpositionen zwischen der ersten und zweiten Position erfolgen kann. So kann die gesamte Zeit genutzt werden, welche sich der Wagen oberhalb der Bearbeitungsstation befindet.

In einer ersten Variante kann dies durch eine Stromschiene erfolgen.

In einer zweiten Variante kann die leitende Verbindung durch einen Stromanschluss erfolgen, welche beweglich am Wagen und/oder der Ladeeinrichtung angebracht ist und daher eine Relativbewegung zwischen Wagen und Ladeeinrichtung erlaubt.

In einer möglichen Ausführungsform der vorliegenden Erfindung ist der Wagen zumindest zeitweise ausschließlich über die Energie des Energiespeichers betreibbar. Dies erlaubt es, die Ladeeinrichtung so auszulegen, dass der Wagen nur in bestimmten Verfahrpositionen und/oder Verfahrabschnitten mit Energie versorgt wird.

Bevorzugt ist der Wagen über mindestens einen und weiter bevorzugt über mehrere Verfahrzyklen ausschließlich über die Energie des Energiespeichers betreibbar. Ein Verfahrzyklus umfasst bevorzugt ein Aufnehmen eines Werkstücks, ein horizontales Verfahren des Wagens, und ein Ablegen des Werkstücks.

Als Energiespeicher werden bevorzugt Supercaps und/oder Batterien eingesetzt.

Insbesondere kann die Energieversorgung des Wagens im Normalbetrieb über Supercaps erfolgen, und die Batterien zur Versorgung des Wagens in einem Notbetrieb eingesetzt werden.

Bevorzugt weist die Steuerung des Wagens einen Notbetriebsmodus auf, in welchem der Wagen mittels der Batterien zu einer Ladeeinrichtung verfahren wird, um ein Aufladen der Supercaps zu ermöglichen. Das Verfahren erfolgt bevorzugt als Schleichfahrt, um Energie zu sparen.

Dieser Aspekt ist auch unabhängig von den oben beschriebenen Aspekten Gegenstand der vorliegenden Erfindung.

Die vorliegenden Erfindung umfasst daher in einem dritten Aspekt eine Ladeportal mit mindestens einem an einer horizontalen Führungsschiene verfahrbaren Wagen, insbesondere zum Transport von Werkstücken zwischen Stationen eines Produktionssystems, wobei der Wagen mindestens einen elektrischen Antrieb und einen elektrischen Engergiespeicher zur zumindest teilweisen Energieversorgung des Antriebs aufweist, und das Ladeportal eine Ladeeinrichtung zum Laden des elektrischen Energiespeichers umfasst, wobei der elektrische Engergiespeicher Supercaps und Batterien umfasst, wobei die Energieversorgung des Wagens im Normalbetrieb über die Supercaps erfolgt und die Batterien zur Versorgung des Wagens in einem Notbetrieb eingesetzt werden.

Insbesondere kann die Steuerung des Wagens einen Notbetriebsmodus aufweisen, in welchem der Wagen mittels der Batterien zu einer Ladeeinrichtung verfahren wird, um ein Aufladen der Supercaps zu ermöglichen.

Weiterhin kann die die Steuerung des Wagens einen Normalbetriebsmodus aufweisen, in welchem der Wagen mittels der Supercaps mit elektrischer Energie versorgt wird.

Bevorzugt wird in den Notbetriebsmodus geschaltet, wenn die in den Supercaps gespeicherte Energie einen bestimmten Wert unterschreitet.

Im Notbetriebsmodus wird der Wagen bevorzugt mit einer Geschwindigkeit verfahren, welche um mindestens einen Faktor 2 unter der Maximalgeschwindigkeit im Normalbetriebsmodus liegt, bevorzugt um mindestens einen Faktor 5.

Bevorzugt weist der Wagen eine Steuerung für den mindestens einen Antrieb auf. Insbesondere kann die Leistungselektronik zur Ansteuerung des Antriebs im Wagen angeordnet sein.

Bevorzugt erhält die Steuerung des Wagens von einer Steuerung des Ladeportals Befehle und/oder Synchronisierungsdaten zur Ansteuerung des Antriebs. Alternativ oder zusätzlich kann die Steuerung Zustandsdaten des Wagens an eine Steuerung des Ladeportals senden.

Bevorzugt erfolgt der Antrieb des Wagens entlang der Führungsschiene über ein Antriebselement des Wagens, welches mit einer Zahnstange der Führungsschiene kämmt. Hierdurch ist die Position des Wagens an der Führungsschiene über die Position des Antriebselementes eindeutig bestimmt. Bei dem Antriebselement kann es sich um ein Ritzel oder eine Schnecke handeln.

Der Wagen kann eine Komponente aufweisen, welche zumindest auch in vertikaler Richtung bewegbar ist. Bevorzugt dient die Komponente zum Bewegen der Werkstücke in vertikaler Richtung. Die Komponente kann einen Greifer zum Greifen der Werkstücke tragen.

Die Komponente kann in einer ersten Ausführungsform eine vertikal bewegbare Linearachse aufweisen. Beispielsweise kann eine vertikal bewegbare Zahnstange eingesetzt werden, welche über einen Antrieb des Wagens vertikal verfahren werden kann. In einer zweiten Ausführungsform kann ein Roboterarm mit mehreren Schwenk- und/oder Rotationsachsen eingesetzt werden. Beispielsweise kann ein 6-Achs-Industrieroboter am Wagen angeordnet werden. Weiterhin ist auch eine Kombination aus Linearachsen und Schwenk- und/oder Rotationsachsen denkbar.

Das erfindungsgemäße Portal kann in einer ersten Variante als ein Linearportal ausgeführt sein, in einer zweiten Variante als ein Flächenportal.

Die Führungsschiene wird bevorzugt über eine oder mehrere Stützen getragen und erstreckt sich bevorzugt oberhalb der Bearbeitungsmaschinen und/oder Zu- und/oder Abführeinrichtungen des Produktionssystems. Handelt es sich um ein Linearportal, so sind die Stützen bevorzugt stationär, wobei die Führungsschiene fest an den Stützen angeordnet ist. Handelt es sich um ein Flächenportal, sind entweder die Stützen verfahrbar, oder die Führungsschiene an den Stützen.

Das Ladeportal ist bevorzugt so ausgestaltet, dass es die Werkstücke unmittelbar greift, oder dass es Paletten und/oder Werkstückhalter, welche die Werkstücke tragen, greift.

Das erfindungsgemäße Ladeportal kann zwei oder mehrere Wagen aufweisen, welche entlang derselben Führungsschiene bewegbar sind.

Da keine Energieversorgungskette mehr notwendig ist, kann das Ladeportal flexibel mit einer Mehrzahl von Wagen ausgerüstet werden. Hierdurch ist insbesondere eine flexible Anpassung an sich ändernde Produktionsabläufe möglich, ohne dass ein größerer konstruktiver Aufwand betrieben werden müsste. Weiterhin können die Wagen auch zu Wartungszwecken problemlos und ohne großen Aufwand ausgetauscht werden.

Die erfindungsgemäße Ausgestaltung des Ladeportals hat den weiteren Vorteil, dass das Ladeportal problemlos verlängert werden kann, um dieses an einen sich ändernden Produktionsprozess oder neue Kundenanforderungen anzupassen. Hierfür muss lediglich die Führungsschiene entsprechend verlängert werden, und ggf. zusätzliche Medienstationen und/oder Ladeeinrichtungen ergänzt werden.

Die vorliegende Erfindung umfasst weiterhin eine Medienstation eines Ladeportals, wie es oben beschrieben wurde.

Weiterhin umfasst die vorliegende Erfindung umfasst weiterhin einen Wagen eines Ladeportals, wie es oben beschrieben wurde.

Medienstation und/oder Wagen sind dabei bevorzugt so ausgestaltet, wie dies oben bereits näher erläutert wurde.

Die vorliegende Erfindung wird nun anhand von Ausführungsbeispielen sowie Zeichnungen näher beschrieben. Dabei zeigen
- Figur 1:: ein erstes Ausführungsbeispiel eines erfindungsgemäßen Ladeportals in einer perspektivischen Ansicht;
- Figur 2:: eine Detailansicht des in Fig. 1 gezeigten ersten Ausführungsbeispiels;
- Figur 3:: die an der Führungsschiene angeordnete Medienstation des in Fig. 1 gezeigten ersten Ausführungsbeispiels;
- Figur 4:: die Medienstation des in Fig. 1 gezeigten ersten Ausführungsbeispiels,
- Figur 5:: eine Detailansicht eines zweiten Ausführungsbeispiels;
- Figur 6:: die an der Führungsschiene angeordnete Medienstation des in Fig. 5 gezeigten zweiten Ausführungsbeispiels und
- Figur 7:: die Medienstation des in Fig. 5 gezeigten zweiten Ausführungsbeispiels,

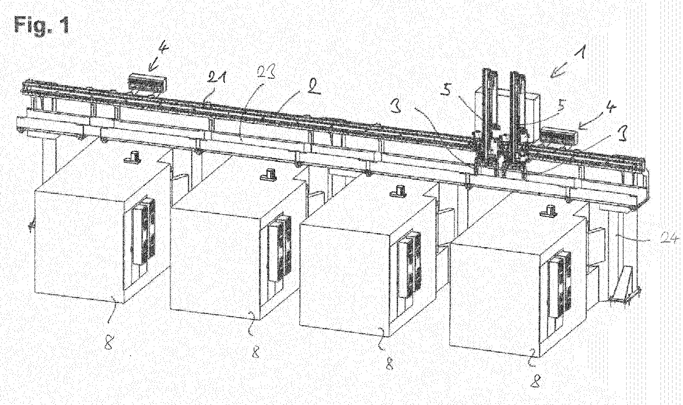

Anhand von Fig. 1 wird zunächst der grundlegende Aufbau der Ausführungsbeispiele des erfindungsgemäßen Ladeportals beschrieben.

Das Ladeportals weist im Ausführungsbeispiel eine horizontal verlaufende Führungsschiene 2 auf, an welcher ein Wagen 1 verfahrbar ist. Die Führungsschiene 2 wird von einer Abstützung 24 getragen, und erstreckt sich über eine Mehrzahl von Stationen 8 eines Bearbeitungssystems hinweg.

Bei den Stationen 8 des Bearbeitungssystems kann es sich um Werkzeugmaschinen handeln und/oder eine Zuführeinrichtung und/oder Abführeinrichtung für Werkstücke.

An dem Wagen 1 ist mindestens eine vertikal verfahrbare Komponente 5 vorgesehen, welche mindestens einen Greifer 3 trägt. Über diese Komponente können Werkstücke aus einer Station des Bearbeitungssystems von oben entnommen, durch Verfahren des Wagens 1 entlang der Führungsschiene 2 zur nächsten Station verfahren, und dort wiederrum von oben der Station zugeführt werden. Der oder die Greifer 3 können entweder unmittelbar ein oder mehrere Werkstücke greifen, oder einen Werkstückhalter wie beispielsweise eine Palette.

Der Wagen 1 weist mindestens einen Antrieb auf, über welchen der Wagen entlang der Führungsschiene 2 verfahrbar ist. Im Ausführungsbeispiel weist die Führungsschiene 2 eine Zahnstange 21 auf, welche mit einem Antriebselement des Wagens 1 kämmt. Bei dem Antriebselement kann es sich beispielsweise um ein Ritzel und/oder um eine Schnecke handeln. Das Antriebselement wird von dem mindestens einen Antrieb des Wagens angetrieben.

Weiterhin weist der Wagen mindestens einen Antrieb auf, über welchen die vertikal verfahrbare Komponente 5 verfahrbar ist.

Der Wagen 1 weist üblicherweise noch weitere Antriebe auf, insbesondere zum Betätigen des Greifers 3 und/oder zum Bewegen des Greifers 3 relativ zum Wagen und/oder der vertikal verfahrbaren Komponente 5.

Im Ausführungsbeispiel wird die vertikal verfahrbare Komponente 5 durch eine Linearachse gebildet, welche einen Antrieb aufweist, über welche sie vertikal verfahren werden kann. Beispielsweise kann eine Zahnstange vorgesehen sein, welche mit einem Antriebselement des Wagens kämmt und hierdurch vertikal am Wagen verfahrbar ist.

Bei dem in Fig. 1 gezeigten Ausführungsbeispiel ist der Wagen 1 als sogenannte H-Konfiguration ausgeführt, bei welcher zwei vertikale Linearachsen 5 mit einem Greifer 3 am Wagen angeordnet sind. Hierdurch kann der erste Greifer zum Entnehmen eines bearbeiteten Werkstück und der zweite Greifer zum Ablegen eines neuen Werkstücks an einer Bearbeitungsstation genutzt werden.

Alternativ kann als vertikal verfahrbare Komponente auch ein Roboterarm mit mehreren Schwenk- und/oder Rotationsachsen eingesetzt werden. Beispielsweise kann an dem Wagen ein Sechs-Achs-Industrieroboter angeordnet werden, bspw. hängend oder seitlich am Wagen.

Im Ausführungsbeispiel weist das Ladeportal weiterhin eine Sicherheits- und/oder Ölwanne 22 auf, welche unterhalb des Wagens 1 angeordnet ist. Die Sicherheits- und/oder Ölwanne 22 erstreckt sich entlang des Verfahrweges der Werkstücke, und weist im Bereich der Stationen 8 des Bearbeitungssystems Öffnungen auf, über welche die Werkstücke aus der jeweiligen Station entnommen bzw. der jeweiligen Stationen übergeben werden können. Hierdurch werden die anderen Bereiche des Bearbeitungssystems von herunterfallenden Werkstücken und/oder von herabtropfendem Öl geschützt. Eine solche Sicherheits- und/oder Ölwanne ist lediglich optional.

Das Ladeportal und/oder Bearbeitungssystem weist einen Schaltschrank auf, in welchem die Steuerung für das Ladeportal angeordnet ist. Die Steuerung des Ladeportals erlaubt bevorzugt eine synchrone Ansteuerung des Ladeportals und der Stationen des Bearbeitungssystems.

Der Wagen 1 weist einen nicht dargestellten Energiespeicher auf, welcher zur Energieversorgung mindestens eines Antriebs des Wagens dient. Der Energiespeicher kann entweder zur Unterstützung einer Energieversorgung des Wagens dienen, oder so ausgelegt sein, dass der Wagen zumindest zeitweise komplett über den Energiespeicher mit Energie versorgt wird.

Bei dem Antrieb handelt es sich im Ausführungsbeispiel um einen elektrischen Antrieb. Bei dem Energiespeicher handelt es sich um einen elektrischen Energiespeicher. Insbesondere kann dabei ein Supercap und/oder ein Akkumulator als elektrischer Energiespeicher eingesetzt werden. Bei dem elektrischen Antrieb kann es sich um einen Elektromotor und/oder um eine elektrische Linearachse handeln.

An einen oder mehreren Positionen entlang der Führungsschiene 2 ist erfindungsgemäß eine Medienstation 4 vorgesehen. Im Ausführungsbeispiel ist die Medienstation 4 über eine Halterung 6 an der Führungsschiene 2 befestigt. Die Medienstation könnte alternativ jedoch auch über einen eigenen Ständer am Boden oder an einer Bearbeitungsstation 8 angeordnet sein.

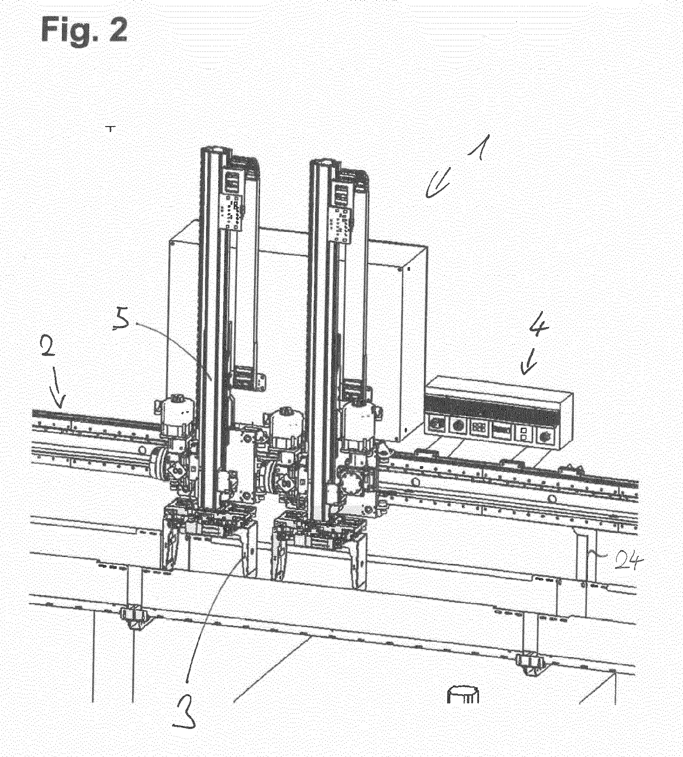

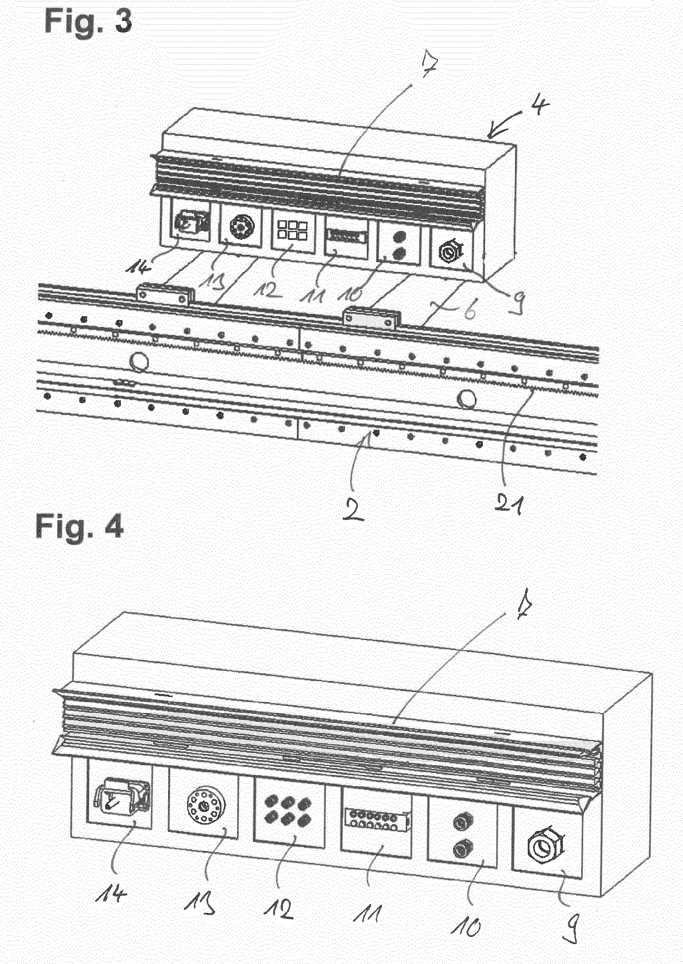

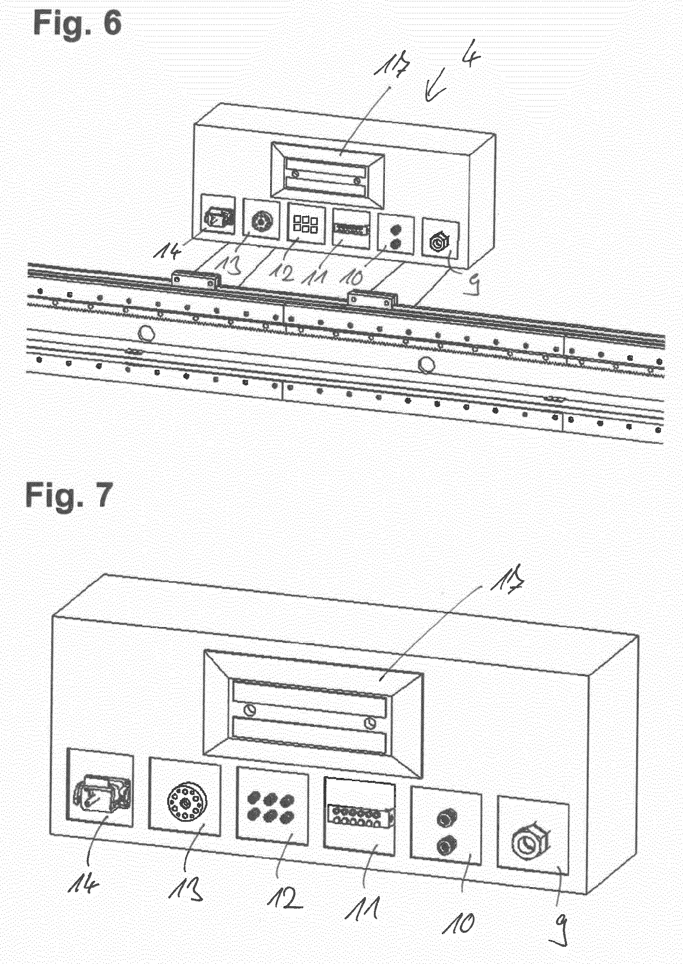

Die Medienstation ist erfindungsgemäß in mindestens einer Position des Wagens mit diesem lösbar mechanisch koppelbar, um mindestens eine Medienverbindung zwischen der Medienstation und dem Wagen herzustellen. Bei den in Figuren 1 - 7 dargestellten Ausführungsbeispielen erlaubt die Medienstation die Herstellung einer Mehrzahl von Medienverbindungen. Beispiele für solche über die Medienstation herstellbaren Medienverbindungen werden im folgenden näher beschrieben. Die vorliegende Erfindung umfasst dabei auch beliebige Unterkombinationen der in den Figuren dargestellten Verbindungen.

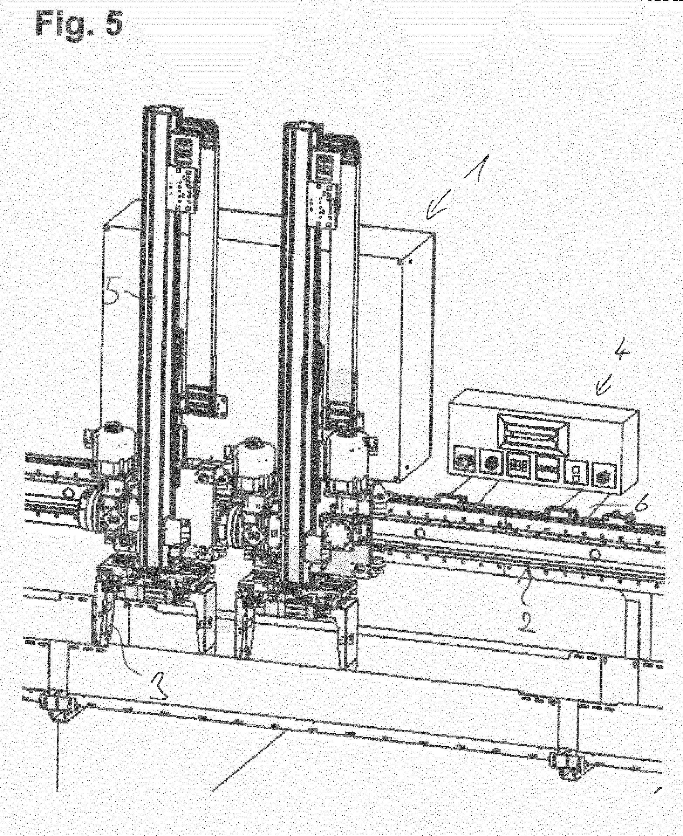

Erfindungsgemäß können dabei beispielsweise eine oder mehrere der folgenden Medien übertragen werden:
1. Strom / Elektrische Energie
   Die Medienstation kann ein oder mehrere Kontaktelemente umfassen, welche in mindestens einer Position des Wagens mit einem Kontaktelement des Wagens leitbar verbindbar sind, um eine elektrische Energieversorgung des Wagens über die Medienstation herzustellen.
   Bei dem in Figuren 1 - 4 dargestellten ersten Ausführungsbeispiel weist die Medienstation hierfür eine Stromschiene 7 auf, an welche Stromabnehmer des Wagens koppelt, wenn sich der Wagen im Bereich der Medienstation befindet. Die Kopplung erfolgt bevorzugt durch die normale Verfahrbewegung des Wagens 1 entlang der Führungsschiene 2, durch welche der Abnehmer seitlich in die Stromschiene hinein verfahren wird. Die Stromschiene erlaubt hierdurch die elektrische Energieversorgung des Wagens über einen Verfahrbereich des Wagens und insbesondere auch während einer Verfahrbewegung.
   Die Medienstation dient im Ausführungsbeispiel als eine Ladeeinrichtung zum Laden des elektrischen Energiespeichers des Wagens. Der Einsatz einer Stromschiene hat hierbei den Vorteil, dass ein Laden des Energiespeichers des Wagens über einen längeren Zeitraum möglich ist.
   Insbesondere ist es möglich, den Energiespeicher auch über solche Arbeitsvorgänge hinweg ununterbrochen zu laden, für welche eine Verfahrbewegung des Wagens notwendig ist. In einem Beispiel für einen solchen Arbeitsvorgang wird ein erster Greifer 3 in einer ersten Verfahrposition oberhalb einer Bearbeitungsstation 8 angeordnet, um ein dort bereits bearbeitetes Werkstück zu entnehmen, der Wagen dann um eine gewisse Strecke in eine zweite Verfahrposition verfahren, um den zweiten Greifer des Wagens in die zuvor durch den ersten Greifer eingenommene Position zu verfahren, und ein neues Werkstück an der Bearbeitungsstation abgelegt. Die Medienstation wird in diesem Fall oberhalb der Bearbeitungsstation 8 angeordnet und mit einer Stromschiene ausgestattet, durch welche die elektrisch leitende Verbindung zwischen der Medienstation und dem Wagen sowohl in der ersten als auch in der zweiten Verfahrposition des Wagens besteht.
   Alternativ kann die Stromversorgung des Wagens über einen elektrischen Anschluss 17 der Medienstation erfolgen, wie er bei dem zweiten Ausführungsbeispiel in Figuren 5 - 7 dargestellt ist. Die elektrisch leitende Verbindung erfolgt hierbei über einen Aktor, über welchen der Anschluss 17 der Medienstation und/oder ein entsprechender Anschluss am Wagen so bewegt wird, dass die beiden Anschlüsse mechanisch miteinander in Verbindung gelangen. Der Anschluss ist jedoch nicht als Schleifkontakt ausgeführt, sodass die Verbindung wieder gelöst wird, bevor der Wagen verfahren wird.
   Auch bei dieser Ausgestaltung kann durch die Anordnung mehrerer Anschlüsse an der Medienstation oder eines langgestreckten Anschlusses an der Medienstation erreicht werden, dass ein Laden des Energiespeichers in zwei unterschiedlichen Positionen des Wagens relativ zur Medienstation möglich ist, insbesondere in solchen ersten und zweiten Verfahrpositionen des Wagens, bei welchen wie oben beschrieben ein erster und ein zweiter Greifer des Wagens zum Aufnehmen eines bearbeiteten und zum Ablegen eines neuen Werkstücks eingesetzt werden können.
   Im Ausführungsbeispiel weist die Medienstation als mögliche weitere Anschlüsse 13 und 14 weiterhin elektrische Verbindungselemente zur Übertragung von elektrischer Energie und/oder Daten und/oder Signalen auf. Diese können entweder anstelle der bereits beschriebenen Elemente eingesetzt werden oder zusätzlich.
   Die elektrische Energieversorgung über die Medienstation wird bevorzugt erst aktiviert, nachdem die leitende Verbindung zwischen den Kontaktelementen des Wagens und der Medienstation hergestellt ist. Insbesondere können die Schiene 7 bzw. die Kontaktelemente 17 erst dann unter Strom gesetzt werden, wenn diese mit den entsprechenden Kontaktelementen des Wagens leitend in Verbindung stehen. Hierdurch wird eine Funkenbildung vermieden.
2. Hydraulische und/oder pneumatische Medien
   Die Medienstation weist in den Ausführungsbeispielen einen Pneumatikanschluss 9 auf, über welchen eine Druckluftversorgung des Wagens erfolgen kann.
   Die Medienstation weist weiterhin einen Hydraulikanschluss 10 auf, über welchen der Wagen an einen Hydraulikkreislauf und insbesondere an eine Pumpe der Medienstation anschließbar ist. Hierdurch können Aktoren des Wagens mit Hydraulikdruck beaufschlagt werden, während die Verbindung besteht. Weiterhin stellt die Hydraulikverbindung auch eine Rücklaufverbindung für das Hydraulikfluid her.
   Die Pneumatik- und/oder Hydraulikverbindung kann entweder zum unmittelbaren Betrieb eines pneumatischen und/oder hydraulischen Aktors eingesetzt werden, während die Verbindung hergestellt ist, und/oder zum Aufladen eines Speichers, dessen Energie dann auch genutzt werden kann, während die Verbindung wieder gelöst ist. Der pneumatische und/oder hydraulische Aktor kann beispielsweise den Greifer betätigen.
3. Schmiermittel
   Die Medienstation weist in den Ausführungsbeispielen einen Anschluss 11 auf, über welchen eine Schmierung des Wagens, insbesondere eines Antriebs und/oder einer Bewegungsachse des Wagens, erfolgen kann.
   Der Anschluss 11 umfasst im Ausführungsbeispiel eine Vielzahl von Schmiermittelkanälen, welche mit entsprechenden Schmiermittelkanälen des Wagens in Verbindung stehen, um unterschiedliche Schmierstellen separat mit Schmiermittel zu versorgen.
   Alternativ oder zusätzlich könnte die Medienstation auch zum Befüllen eines zentralen Schmiermittelbehälters des Wagens eingesetzt werden.
4. Kühlmittel
   Die Medienstation kann weiterhin einen Anschluss zur Verbindung eines Kühlsystems des Wagens mit einem Kühlkreislauf der Medienstation aufweisen. Dies erlaubt eine Kühlung von Elementen des Wagens, während dieser mit der Medienstation gekoppelt ist. Bevorzugt weist der Kühlmittelkreislauf der Medienstation zumindest einen Wärmetauscher und/oder Kondensator auf. Das Kühlmittelsystem des Wagens kann hierdurch einfacher ausgestaltet sein.
5. Daten / Signale
   Die Medienstation weist in den Ausführungsbeispielen weiterhin einen Anschluss 12 zur Übertragung von Signalen und/oder Daten zwischen der Medienstation und dem Wagen auf. Zur Herstellung der Daten- und/oder Signalverbindung werden Kontaktelemente der Medienstation mit Kontaktelementen des Wagens in leitende Verbindung gebracht. Die Kontaktelemente können in Form eines Stecker/Steckdosensystems ausgeführt sein.
   Hierdurch können beispielsweise Daten aus dem Wagen ausgelesen und/oder Steuerbefehle zum Wagen übertragen werden. Durch die leitende Verbindung sind erheblich höhere Bandbreiten und eine sicherere Übertragung als bei drahtlosen Systemen möglich.
6. Verbrauchsmaterialien
   Die Medienstation kann weiterhin der Versorgung des Wagens mit Verbrauchsmaterialien, welche während des Betriebs des Wagens zur Bearbeitung eines Werkstücks benötigt werden, dienen. Insbesondere könnten mittels der Medienstation Kleinteile, Schweißdraht und/oder Strahlsand für die Bearbeitung von Werkstücken auf den Wagen übertragen werden.

Zur mechanischen Verbindung des oder der Anschlüsse der Medienstation mit den entsprechenden Anschlüssen des Wagens ist bei allen Ausführungsbeispielen bis auf die Stromschiene ein Aktor vorhanden, welcher eine Relativbewegung zwischen dem oder den Anschlüssen der Medienstation und Anschlüssen des Wagens erzeugt, wobei die Relativbewegung zumindest auch eine Komponente in einer Richtung senkrecht zur Verfahrbewegung des Wagens entlang der Führungsschiene 2 umfasst. Durch diesen Aktor können der oder die Anschlüsse aufeinander zu bewegt werden und mechanisch miteinander gekoppelt werden. Bevorzugt dient der Aktor auch zum Lösen der Kopplung.

Dabei kann eine gemeinsame Kopplungsanordnung zur gemeinsamen Bewegung mehrerer unterschiedlicher Anschlüsse in eine Kopplungsposition eingesetzt werden.

Insbesondere können mehrere unterschiedliche Anschlüsse auf einem Kopplungselement angeordnet sein, welches durch den Aktor in eine Kopplungsposition bewegbar und/oder aus der Kopplungsposition in eine ungekoppelte Position bewegt wird.

Alternativ können auch einzelne Anschlüsse jeweils separate Kopplungsanordnungen und/oder Aktoren aufweisen.

Bevorzugt werden die Anschlüsse der Medienstation über eine oder mehrere Kopplungsanordnungen an den Wagen herangefahren, wenn sich dieser in der hierzu geeigneten Position gegenüber der Medienstation befindet.

In einer möglichen Ausgestaltung der vorliegenden Erfindung kann zumindest eine der Medienverbindungen zwischen Medienstation und Wagen nur in einer einzigen definierten Verfahrposition des Wagens hergestellt werden. In den in Fig. 1 bis 7 dargestellten Ausführungsbeispielen können insbesondere alle Medienverbindungen bis auf ggf. die Verbindung zur elektrischen Energieversorgung nur in einer Verfahrposition des Wagen hergestellt werden

In einer möglichen Ausgestaltung der vorliegenden Erfindung könnten Anschlüsse der Medienstation und/oder des Wagens in Verfahrrichtung des Wagens um eine gewisse Strecke verfahrbar an der Medienstation und/oder am Wagen angeordnet sein. Nach Herstellung der mechanischen Verbindung erlaubt dies eine gewisse Relativbewegung des Wagens zur Medienstation, ohne dass die Medienverbindung gelöst werden müsste.

Die Ansteuerung des Ladeportals erfolgt bevorzugt vollständig automatisiert. Die Kopplung zwischen den Anschlüssen der Medienstation und des Wagens erfolgt bevorzugt automatisch durch eine entsprechende Ansteuerung des hierfür eingesetzten Aktors, wenn sich der Wagen in einer hierfür geeigneten Verfahrposition befindet. In gleicher Weise erfolgt bevorzugt das Lösen der Kopplung automatisch durch eine entsprechende Ansteuerung des hierfür eingesetzten Aktors, bevor der Wagen in eine andere Verfahrposition verfahren wird, in welcher eine Kopplung nicht möglich ist.

Anstelle der elektrischen Energieversorgung über die erfindungsgemäße Herstellung einer leitenden Verbindung könnte die Energieversorgung auch drahtlos erfolgen, wie dies aus dem Stand der Technik bereits bekannt ist. Beispielsweise könnte im Bereich der Medienstation hierfür eine Induktionsspule vorgesehen werden, über welche eine drahtlose Energieversorgung des Wagens erfolgen kann, wenn dieser sich im Bereich der Medienstation befindet. In diesem Fall dient die Medienstation nur noch der Übertragung mindestens eines weiteren Mediums, welches oben beschrieben wurde.

Die Energieversorgung kann zum Laden des Energiespeichers und/oder zur Energieversorgung eines oder mehrerer Antriebe des Wagens eingesetzt werden.

Unabhängig davon, ob die Energieversorgung über einen elektrisch leitenden Kontakt oder drahtlos erfolgt, ist diese bevorzugt so ausgestaltet, dass ein Laden der Energiespeicher des Wagens mit einem Strom von mehr als 100 Ampere erfolgt.

Die Medienstation wird bevorzugt in Bereichen der Führungsschiene 2 angeordnet, in welchen der Wagen während des Normalbetriebs ohnehin anhält. Insbesondere kann sie dabei über einer Werkzeugmaschine, einer Rohteilentnahme und/oder einer Fertigteilablage angeordnet werden.

Weiterhin können auch mehrere Medienstationen entlang der Führungsschiene 2 vorgesehen sein, wie dies in Figur 1 dargestellt ist. Bevorzugt werden die Medienstationen auch in diesem Fall an den oben genannten Positionen angeordnet.

Eine Medienstation in einer Parkposition, welche außerhalb des für den Normalbetrieb notwendigen Verfahrwegs liegt, ist ebenfalls denkbar.

Der Einsatz der Medienstation hat den Vorteil, dass auf die bisher notwendige Versorgungskette zur Versorgung des Wagens 1 verzichtet werden kann. Hierdurch wird eine erheblich höhere Flexibilität bei der Auslegung und insbesondere bei der Erweiterung des Ladeportals erreicht. Weiterhin handelt es sich bei der Versorgungskette um einen Verschleißteil, auf welches nunmehr verzichtet werden kann.

Weiterhin erlaubt die erfindungsgemäße Lösung prinzipiell den Einsatz beliebig vieler Wagen an einem Ladeportal, d.h. an einer Führungsschiene, da nicht mehr entsprechend viele Versorgungsketten vorgesehen werden müssen. Zudem können einzelne Wagen beispielsweise zur Wartung problemlos abgenommen und ausgetauscht werden. Hierzu muss lediglich noch die mechanische Verbindung mit der Führungsschiene 2 gelöst werden bzw. wieder hergestellt werden.

In einem weiteren unabhängigen Aspekt der vorliegenden Erfindung umfasst der elektrische Energiespeicher des Wagens 1 sowohl Supercaps als auch Batterien. Im Normalbetrieb erfolgt der Betrieb des Wagens über die von den Supercaps zur Verfügung gestellte Energie, da die Supercaps ein sehr schnelles Laden ermöglichen. Die Batterien dienen dagegen für die Energieversorgung in einem Notbetrieb, insbesondere nach einem Ausfall der Stromversorgung des Ladeportals oder einem Nothalt an einer Position, an welcher keine Medienstation und/oder Ladestation angeordnet ist.

Da die Supercaps eine sehr hohe Selbstentladung aufweisen, sind diese nach einem Stillstand des Systems gegebenenfalls bereits so stark entladen, dass der Wagen über die Supercaps nicht mehr verfahren werden kann. Die Batterien ermöglichen in diesem Fall in einem Notbetriebsmodus eine Schleichfahrt zur nächsten Medienstation, um die Supercaps wieder laden zu können.

Dieser Aspekt der Ausgestaltung des erfindungsgemäßen Wagens ist auch unabhängig von dem Einsatz einer erfindungsgemäßen Medienstation Gegenstand der vorliegenden Erfindung.

Im Ausführungsbeispiel ist das Ladeportal als ein Linearportal ausgeführt, so dass die Führungsschiene 2 über die Abstützung 24 stationär am Boden angeordnet ist.

Die vorliegende Erfindung kann in gleicher Weise auch an einem Flächenportal eingesetzt werden, bei welchem die Führungsschiene 2 senkrecht zu ihrer Erstreckung horizontal verfahren werden kann. Dies kann entweder über eine verfahrbare Abstützung 10 erfolgen, oder indem die Führungsschiene 2 an der Abstützung 24 verfahrbar angeordnet ist.

## Patentansprüche

1. Ladeportal mit mindestens einem an einer horizontalen Führungsschiene verfahrbaren Wagen, insbesondere zum Transport von Werkstücken zwischen Stationen eines Produktionssystems,
**dadurch gekennzeichnet,**
**dass** das Ladeportal eine Medienstation aufweist, welche in mindestens einer Position des Wagens mit diesem lösbar mechanisch koppelbar ist, um mindestens eine Medienverbindung zwischen der Medienstation und dem Wagen herzustellen.

2. Ladeportal nach Anspruch 1, wobei die Medienstation mindestens einen Anschluss aufweist, welcher in mindestens einer Position des Wagens mit einem Anschluss des Wagens koppelbar ist, um das mindestens eine Medium zum Wagen zu übertragen, wobei die Kopplung bevorzugt durch einen Aktor der Medienstation und/oder des Wagens erfolgt und/oder die Anschlüsse bevorzugt jeweils ein Ventil aufweisen, welches die Anschlüsse schließt, wenn die Kopplung mit dem jeweils anderen Anschluss gelöst wird.

3. Ladeportal nach Anspruch 1 oder 2, wobei es sich bei mindestens einem Medium um ein granulares, pastöses, flüssiges und/oder gasförmiges Medium handelt.

4. Ladeportal nach einem der vorangegangenen Ansprüche, wobei der Wagen über die Medienstation mit Hydraulik- und/oder Pneumatikdruck beaufschlagbar ist, wobei der Wagen bevorzugt einen hydraulischen und/oder pneumatischen Aktor aufweist, welcher über den über die Medienstation zugeführten Hydraulik- und/oder Pneumatikdruck betreibbar ist, wobei der Hydraulik- und/oder Pneumatikdruck bevorzugt zur Betätigung des Aktors dient, während sich der Wagen im Bereich der Medienstation befindet, und/oder wobei bevorzugt der Hydraulik- und/oder Pneumatikdruck zum Laden eines Hydraulik- und/oder Pneumatikspeichers des Wagens dient.

5. Ladeportal nach einem der vorangegangenen Ansprüche, wobei ein Schmiermittelsystem des Wagens über die Medienstation mit Schmiermittel beaufschlagbar ist.

6. Ladeportal nach einem der vorangegangenen Ansprüche, wobei der Wagen über die Medienstation mit Kühlmittel beaufschlagbar ist, wobei der Wagen in der mindestens einen Position bevorzugt an einen Kühlmittelkreislauf der Medienstation anschließbar ist, um eine Komponente des Wagens zu kühlen.

7. Ladeportal nach einem der vorangegangenen Ansprüche, wobei eine Daten- und/oder Signalverbindung zwischen dem Wagen und der Medienstation herstellbar ist, wobei die Daten- und/oder Signalverbindung bevorzugt durch die Herstellung einer elektrisch leitenden Verbindung zwischen Anschlüssen des Wagens und der Medienstation erfolgt.

8. Ladeportal nach einem der vorangegangenen Ansprüche, wobei der Wagen über die Medienstation mit Elementen und/oder Medien versorgbar ist, welche über einen Aktor des Wagens zur Bearbeitung eines Werkstücks verbaut und/oder verbraucht werden, insbesondere mit elektronischen und/oder mechanischen Kleinteilen, Schweißdraht und/oder Lötdraht, und/oder Strahlsand zur Sandstrahlbearbeitung.

9. Ladeportal nach einem der vorangegangenen Ansprüche, wobei die der Wagen über die Medienstation mit elektrischer Energie versorgbar ist, wobei ein Kontaktelement der Medienstation in mindestens einer Position des Wagen mit einem Kontaktelement des Wagens leitend verbindbar ist, wobei der Wagen bevorzugt mindestens einen elektrischen Antrieb und einen elektrischen Engergiespeicher zur zumindest teilweisen Energieversorgung des Antriebs aufweist, und das Ladeportal eine Ladeeinrichtung zum Laden des elektrischen Energiespeichers umfasst, und/oder wobei das Ladeportal bevorzugt eine Steuerung aufweist, welche die Stromversorgung durch die Ladeeinrichtung erst aktiviert, nachdem die leitende Verbindung zwischen der Ladeeinrichtung und dem Wagen hergestellt wurde.

10. Ladeportal nach einem der vorangegangenen Ansprüche, wobei mindestens eine Medienstation in einer Arbeitsposition, in welcher der Wagen über einer Station des Bearbeitungssystems stoppt, um ein Werkstück abzulegen oder aufzunehmen, und/oder in einer Parkposition des Wagens angeordnet ist.

11. Ladeportal nach einem der vorangegangenen Ansprüche, wobei der Wagen zwei Greifer aufweist, welche jeweils in vertikaler Richtung bewegbar sind, wobei das Ladeportal eine Steuerung aufweist, durch welche der eine Greifer in einer ersten Position des Wagens zum Entnehmen eines bearbeiteten Werkstücks aus einer Bearbeitungsstation und der andere Greifer in einer zweiten Position des Wagens zum Ablegen eines neuen Werkstücks an der Bearbeitungsstation angesteuert wird, wobei der Wagen zwischen dem Entnehmen des bearbeiteten Werkstücks in der ersten Position des Wagens und dem Ablegen des neuen Werkstücks in der zweiten Position des Wagens von der ersten zu der zweiten Position entlang der horizontalen Führungsschiene verfahren wird, insbesondere um nacheinander den einen und den anderen Greifer über der Bearbeitungsstation anzuordnen.

12. Ladeportal nach Anspruch 9 und 11, wobei die Ladeeinrichtung so ausgestaltet ist, dass das Laden des Energiespeichers sowohl in der ersten als auch in der zweiten Position des Wagens erfolgen kann, wobei bevorzugt ein Laden auch in allen Zwischenpositionen zwischen der ersten und zweiten Position erfolgen kann.

13. Ladeportal nach einem der vorangegangenen Ansprüche, wobei der Antrieb des Wagens entlang der Führungsschiene über ein Antriebselement des Wagens erfolgt, welches mit einer Zahnstange der Führungsschiene kämmt, und/oder wobei der Wagen eine Komponente aufweist, welche zumindest auch in vertikaler Richtung bewegbar ist, wobei die Komponente bevorzugt zum Bewegen der Werkstücke in vertikaler Richtung dient und/oder einen Greifer trägt, wobei die Komponente bevorzugt eine vertikal bewegbare Linearachse und/oder einen Roboterarm mit mehreren Schwenk- und/oder Rotationsachsen aufweist.

14. Ladeportal nach einem der vorangegangenen Ansprüche, wobei es sich um ein Linearportal oder um ein Flächenportal handelt, und/oder wobei die Führungsschiene über eine oder mehrere Stützen getragen wird.

15. Medienstation und/oder Wagen eines Ladeportals nach einem der vorangegangenen Ansprüche.
